# EUROPEAN PATENT APPLICATION

(11) **EP 3 208 326 A1**
(43) Date of publication of application: **23.08.2017**
(21) Application number: 15851559.3
(22) Date of filing: 13.10.2015
(51) Int. Cl.: C09K 3/14, F16D 69/02

(54) **FRICTION MATERIAL COMPOSITION, FRICTION MATERIAL, AND FRICTION MEMBER**

(30) Priority: 14.10.2014 JP 2014210020; 14.10.2014 JP 2014210028
(71) Applicant: Japan Brake Industrial Co., Ltd., Hachioji-shi, Tokyo 192-0041 (JP)
(72) Inventor: UNNO, Mitsuo, Tokyo 100-6606 (JP); MITSUMOTO Masamichi, Tokyo 100-6606 (JP)
(74) Representative: Eisenführ Speiser
(86) International application number: PCT/JP2015/078949
(87) International publication number: WO 2016/060129

(57) **Abstract**

The present invention provides a friction material composition, a friction material and a friction material member have superior fade resistance and wear resistance at a high-temperature, even if copper having a high environmental burden is not contained or it is contained in an amount of 0.5 mass% or less. The friction material composition includes a binder, organic filler, inorganic filler and a fiber reinforcement, and does not contain copper as an element or contains copper in an amount of 0.5 mass % or less, and the inorganic filler is one or more selected from the group of γ alumina having an average particle size of 10 nm to 50 µm, dolomite having an average particle size of 1 to 20 µm, calcium carbonate having an average particle size of 1 to 20 µm, magnesium carbonate having an average particle size of 1 to 20 µm, manganese dioxide having an average particle size of 1 to 20 µm, zinc oxide having an average particle size of 10 nm to 1 µm, magnetite having an average particle size of 1.0 µm or less, cerium oxide having an average particle size of 0.5 to 5 µm, and zirconia having an average particle size of 5 to 50 nm.

## Description

### Field of the Invention

The present invention relates to a friction material composition which is suitable for friction material, such as for a disc brake pad, etc., used for braking automobiles, and in particular, relates to a non-asbestos friction material composition which does not contain asbestos. Furthermore, the present invention relates to friction material and a friction material member using the above friction material composition.

### Background Art

In automobiles, etc., friction material such as for a disc brake pad, a brake lining, etc., is used for braking. The friction material is useful for braking, since friction is caused with a counterpart such as a disc rotor, a brake drum, etc. Therefore, suitable friction coefficient, wear resistance (long product life of the friction material), strength, vibration resistance (less brake noise), etc., are required in the friction material. The friction coefficient is required to be stable regardless of vehicle speed, deceleration, or brake temperature.

In the friction material, a friction material composition including a binder, a fiber reinforcement, inorganic filler, organic filler, etc., is used, and the friction material composition containing each component alone or in combination is often used, in order to exhibit the above characteristics. Of them, copper is mixed in fiber form or powder form into the friction material, and it is an effective component to maintain the friction coefficient (fade resistance) under braking conditions at a high temperature or to improve the wear resistance at a high temperature. However, use of the friction material containing copper is restricted because abrasion powder containing copper is generated by braking and often pollutes rivers, lakes, oceans, etc. Publications 1 and 2 propose ways to avoid such restriction of use of copper.

[0004] Patent Publication 1 is Japanese Unexamined Patent Application Publication No. 2014-025014. Patent Publication 2 is International Publication No. WO2012/066968.

### DISCLOSURE OF THE INVENTION

### PROBLEMS SOLVED BY THE INVENTION

In the Patent Publication 1, in order to improve the fade resistance of the friction material which does not contain copper, friction material which contains a given amount of one or more selected from the group of potassium carbonate, potassium hydrogen carbonate, sodium carbonate, and sodium hydrogencarbonate, into a part of friction adjusting material, as a decomposition catalyst of binder, is described. However, since these additives have high water solubility, the fade resistance is often deteriorated by elution of the additives in practical use in environments in which the friction material is exposed to rain water, etc.

In the Patent Publication 2, in order to improve the wear resistance at a high temperature of a friction material that does not contain copper, friction material using lithium potassium titanate and graphite was proposed. However, the wear resistance was insufficient under braking conditions in which brake temperature exceeds 500 degrees C.

The present invention was completed in view of the above-described circumstances, and an object thereof is to provide a friction material that has superior fade resistance and wear resistance at a high temperature, which does not contain copper, which has a high environmental burden, or which contains copper in an amount of 0.5 mass% or less to a total amount of the friction material composition even if copper is contained.

### MEANS FOR SOLVING THE PROBLEMS

The present inventors conducted various research with regard to additives to improve the fade resistance and the wear resistance at a high temperature in the composition not containing copper, and as a result, they found that during a high-temperature braking, binder residue such as tar is generated on a friction surface by decomposing binder at a high temperature, and friction coefficient is decreased by covering the friction surface with this binder residue, and as a result, the fade resistance is deteriorated. In addition, when inorganic filler having a certain decomposition catalytic activity is added and dispersed in the friction material, the binder residue (tar) generated on the friction surface by decomposing binder at a high temperature in high-temperature braking is decomposed and removed by the inorganic filler having the decomposition catalytic activity, and the friction coefficient is not decreased and is maintained during the high-temperature braking, and therefore, the fade resistance can be improved. Furthermore, as inorganic filler having the above decomposition catalytic activity, γ alumina having an average particle size of 10 nm to 50 µm, dolomite having an average particle size of 1 to 20 µm, calcium carbonate having an average particle size of 1 to 20 µm, magnesium carbonate having an average particle size of 1 to 20 µm, manganese dioxide having an average particle size of 1 to 20 µm, zinc oxide having an average particle size of 10 nm to 1 µm, magnetite having an average particle size of 1.0 µm or less, cerium oxide having an average particle size of 0.5 to 5 µm, and zirconia having an average particle size of 5 to 50 nm, can be used. Additionally, the above inorganic filler having the decomposition catalytic activity has a low water solubility so as not to dissolve, and therefore, the above function is exhibited and the superior fade resistance is maintained, even in practical use in environments in which the friction material is exposed to rain water, etc.

The friction material composition of the present invention based on this knowledge is a friction material composition including a binder, organic filler, inorganic filler and a fiber reinforcement, wherein the friction material composition does not contain copper as an element or contains copper in an amount of 0.5 mass % or less, and the inorganic filler is one or more selected from the group of γ alumina having an average particle size of 10 nm to 50 µm, dolomite having an average particle size of 1 to 20 µm, calcium carbonate having an average particle size of 1 to 20 µm, magnesium carbonate having an average particle size of 1 to 20 µm, manganese dioxide having an average particle size of 1 to 20 µm, zinc oxide having an average particle size of 10 nm to 1 µm, magnetite having an average particle size of 1.0 µm or less, cerium oxide having an average particle size of 0.5 to 5 µm, and zirconia having an average particle size of 5 to 50 nm.

In the friction material composition of the present invention, it is preferable that the inorganic filler be contained in an amount of 1 to 35 mass% to a total amount of the friction material composition. In addition, it is preferable that one of the inorganic filler be γ alumina having an average particle size of 10 to 50 µm and BET specific surface area of the γ alumina be 50 to 300 m²/g, and it is preferable that one of the inorganic fillers be manganese dioxide having an average particle size of 1 to 20 µm and BET specific surface area of the manganese dioxide be 100 to 300 m²/g. Furthermore, it is preferable that the average particle size of zinc oxide be 10 to 50 nm.

The friction material of the present invention is made of the above friction material composition of the present invention, and the friction material member of the present invention is formed by using the above friction material made of the friction material composition of the present invention and a back plate.

According to the present invention, a friction material composition, a friction material and a friction material member have superior fade resistance and wear resistance at a high-temperature which exceeds 500 degrees C, even if copper having a high environmental burden is not used, when they are used for friction material of a disc brake pad for automobiles.

### PREFERRED EMBODIMENTS OF THE INVENTION

In the following, a friction material composition of the present invention, and friction material and a friction material member using the friction material composition, will be explained. Here, the friction material composition of the present invention is a so-called non-asbestos friction material composition that does not contain asbestos.

### Friction Material Composition

The friction material composition of the present invention is a friction material composition which does not contain copper or which contains copper in an amount of 0.5 mass% or less to a total amount of the friction material composition even if copper is contained, and it is preferably a friction material composition which does not contain copper. Therefore, rivers, lakes, and the ocean are not polluted, even if abrasion powder is generated in braking. Inorganic Filler having Decomposition Catalytic Activity used in Present Invention

In order to improve the fade resistance and the wear resistance at a high temperature in the composition not containing copper, the present invention contains one or more inorganic fillers selected from the group of γ alumina having an average particle size of 10 nm to 50 µm, dolomite having an average particle size of 1 to 20 µm, calcium carbonate having an average particle size of 1 to 20 µm, magnesium carbonate having an average particle size of 1 to 20 µm, manganese dioxide having an average particle size of 1 to 20 µm, zinc oxide having an average particle size of 10 nm to 1 µm, magnetite having an average particle size of 1.0 µm or less, cerium oxide having an average particle size of 0.5 to 5 µm, and zirconia having an average particle size of 5 to 50 nm. Particle sizes and average particle sizes of these inorganic fillers can be measured using a laser diffraction particle size analyzer.

These inorganic fillers have a decomposition catalytic activity. These inorganic fillers are added to the friction material composition, so as to disperse in the friction material as uniformly as possible. In high-temperature braking, binder residue (tar) generated on a friction surface at a high temperature is decomposed and removed by these inorganic fillers. Therefore, the friction coefficient is not decreased and is maintained in the high-temperature braking, and as a result, the fade resistance can be improved.

It is preferable that these inorganic fillers having a decomposition catalytic activity be contained in an amount of 1 to 35 mass % to a total amount of the friction material composition, and it is more preferable that they be contained in an amount of 1 to 30 mass %, and it is most preferable that they be contained in an amount of 1 to 15 mass %. When these inorganic fillers are contained in an amount of 1 to 35 mass %, the wear resistance at a high temperature is particularly superior, and contents of other components of the friction material are preferably balanced.

Of these inorganic fillers having a decomposition catalytic activity, the γ alumina is particularly preferable since the specific surface area is large and it is highly catalytic. When the γ alumina is used, it is more preferable that an average particle size of the γ alumina be 10 to 50 µm from the viewpoint of the fade resistance. Furthermore, it is preferable that BET specific surface area of the γ alumina be 50 to 300 m²/g from the viewpoint of the fade resistance, and it is more preferable that it be 150 to 300 m²/g.

The manganese dioxide and the zinc oxide are also suitable as an inorganic filler having a decomposition catalytic activity, since they are highly catalytic. When the manganese dioxide is used, it is desirable that an average particle size be 1 to 20 µm from the viewpoint of the fade resistance, and BET specific surface area be 100 to 300 m²/g. When zinc oxide is used, it is preferable that an average particle size of the zinc oxide be 10 nm to 1 µm from the viewpoint of the fade resistance, and it is more preferable that it be 10 to 50 nm.

The dolomite having an average particle size of 1 to 20 µm, the calcium carbonate having an average particle size of 1 to 20 µm, the magnesium carbonate having an average particle size of 1 to 20 µm, the magnetite having an average particle size of 1.0 µm or less, the cerium oxide having an average particle size of 0.5 to 5 µm, and the zirconia having an average particle size of 5 to 50 nm also have a decomposition catalytic activity. In high-temperature braking, they have a function that decomposes and removes the binder residue (tar) generated on the friction surface at a high temperature.

Therefore, in the present invention, as an inorganic filler having a decomposition catalytic activity in this invention, one or more inorganic fillers selected from the group of γ alumina having an average particle size of 10 nm to 50 µm, dolomite having an average particle size of 1 to 20 µm, calcium carbonate having an average particle size of 1 to 20 µm, magnesium carbonate having an average particle size of 1 to 20 µm, manganese dioxide having an average particle size of 1 to 20 µm, zinc oxide having an average particle size of 10 nm to 1 µm, magnetite having an average particle size of 1.0 µm or less, cerium oxide having an average particle size of 0.5 to 5 µm, and zirconia having an average particle size of 5 to 50 nm, can be used.

### Binder

The binder has a function for binding together organic filler, inorganic filler and a fiber reinforcement, which are included in the friction material composition, etc., and it imparts strength. The binder that is included in the friction material composition of the present invention contains, but is not limited to, thermosetting resins often used as a binder of the friction material.

As the above thermosetting resin, for example, phenol resins; various elastomer dispersed phenol resins such as acrylic elastomer dispersed phenol resins, silicone elastomer dispersed phenol resins, etc.; various modified phenol resins such as acrylic modified phenol resins, silicone modified phenol resins, cashew oil modified phenol resins, epoxy modified phenol resins, alkylbenzene modified phenol resins, etc.; or the like, can be used alone or in combination. In particular, phenol resins, acrylic modified phenol resins, silicone modified phenol resins, alkylbenzene modified phenol resins are preferably used, since superior heat resistance, formability and friction coefficient are imparted.

It is preferable that the binder in the friction material composition of the present invention be contained in an amount of 5 to 20 mass % to a total amount of the friction material composition, and it is more preferable that it be contained in an amount of 5 to 10 mass %. When the binder is contained in an amount of 5 to 20 mass %, strength decrease of the friction material can be further prevented, and moreover, deterioration of resistance to sound and vibration such as squealing, etc., can be further prevented by decreasing porosity of the friction material and by increasing elastic modulus.

### Organic Filler

The organic filler is included as a friction modifier for improving the resistance to sound and vibration and the wear resistance of the friction material, etc. The organic filler which is included in the friction material composition of the present invention contains, but is not limited to, a cashew dust or a rubber component, which are often used as an organic filler, etc., as long as the above performances can be exhibited.

The above cashew dust may be a cashew dust generated by curing cashew nut shell oil and crushing, which is often used in the friction material.

As the above rubber constituent, for example, tire rubber, acrylic rubber, isoprene rubber, NBR (nitrile butadiene rubber), SBR (styrene butadiene rubber), chlorinated butyl rubber, butyl rubber, silicone rubber, etc. can be used alone or in combination.

In the friction material composition of the present invention, it is preferable that the organic filler be contained in an amount of 1 to 20 mass % to a total amount of the friction material composition, and it is more preferable that it be contained in an amount of 1 to 10 mass %, and it is most preferable that it be contained in an amount of 3 to 8 mass %. When the organic filler is contained in an amount of 1 to 20 mass %, the elastic modulus of the friction material can be increased and deterioration of the resistance to sound and vibration such as squealing can be prevented, and moreover, deterioration of the heat resistance and degradation of the strength due to heat history can be prevented.

### Inorganic Filler

The inorganic filler is added as a friction modifier, in order to prevent the deterioration of the heat resistance of the friction material and to improve the wear resistance or the friction coefficient. The friction material composition of the present invention may also contain an inorganic filler that is often used in the friction material in addition to the above inorganic filler having a catalytic activity.

As the above inorganic filler, for example, tin monosulfide, molybdenum disulfide, ferric sulfide, antimony trisulfide, bismuth sulfide, zinc sulfide, calcium hydroxide, calcium oxide, sodium carbonate, barium sulfate, coke, graphite, mica, vermiculite, calcium sulfate, talc, clay, zeolite, zirconium silicate, mullite, chromite, titania, magnesium oxide, silica, potassium titanate, lithium potassium titanate, magnesium potassium titanate, and sodium titanate, can be used. Furthermore, as an inorganic filler, γ alumina, dolomite, calcium carbonate, magnesium carbonate, manganese dioxide, zinc oxide, magnetite, cerium oxide, zirconia, etc., having a particle size other than the above specific particle size, can be used alone or in combination.

In the friction material composition of the present invention, it is preferable that the total inorganic filler including the above inorganic filler having a decomposition catalytic activity be contained in an amount of 30 to 80 mass % to a total amount of the friction material composition, and it is more preferable that it be contained in an amount of 40 to 70 mass %, and it is most preferable and it be contained in an amount of 50 to 60 mass %. When the inorganic filler is contained in an amount of 30 to 80 mass %, deterioration of the heat resistance can be prevented, and contents of other components of the friction material are preferably balanced.

### Fiber reinforcement

The fiber reinforcement imparts a reinforcing effect to the friction material.

In the friction material composition of the present invention, inorganic fibers, metallic fibers, organic fibers, carbon fibers, etc., which are often used as a fiber reinforcement, can be used alone or in combination.

The above inorganic fibers may contain ceramic fibers, biodegradable ceramic fibers, mineral fibers, glass fibers, silicate fibers, etc., alone or in combination. Of these inorganic fibers, biodegradable mineral fibers that contain SiO₂, Al₂O₃, CaO, MgO, FeO, Na₂O, etc., in selective combination, are preferable, and Roxul series produced by LAPINUS FIBERS B.V, etc., are available as a commercial product.

The above metallic fibers contain, but are not limited to, for example, fibers made of simple metal or alloy other than copper or copper alloy, such as aluminum, iron, zinc, tin, titanium, nickel, magnesium, silicon, etc., or fibers in which metal is a main component, such as cast iron fiber, etc., as long as they can be often used in the friction material.

Here, in the present invention, copper and copper alloy that are environmental hazards, are not substantially contained, copper as an element is contained in an amount of 0.5 weight % or less to a total amount of the friction material composition, and it is preferably contained in an amount of 0 mass %.

As the above organic fibers, aramid fibers, cellulose fibers, acrylic fibers, phenolic fibers, etc., can be used alone or in combination.

As the above carbon system fibers, flame resistant fibers, pitch-based carbon fibers, PAN based carbon fibers, activated carbon fibers, etc., can be used alone or in combination.

In the friction material composition of the present invention, it is preferable that the fiber reinforcement be contained in an amount of 5 to 40 mass % to a total amount of the friction material composition, and it is more preferable that it be contained in an amount of 5 to 20 mass %, and it is most preferable that it be contained in an amount of 5 to 15 mass %. When the fiber reinforcement is contained in an amount of 5 to 40 mass %, the optimal porosity as a friction material can be obtained, squealing can be prevented, and the suitable material strength can be obtained, wear resistance can be exhibited, and the formability can be improved.

### Friction Material

The friction material of this embodiment is produced by molding the friction material composition of the present invention using a commonly used method, preferably by hot-press molding. Specifically, for example, the friction material composition of the present invention is uniformly mixed using a mixer such as a Lödige (trade name) mixer, a pressurizing kneader, an Eirich (trade name) mixer, etc., this mixture is pre-molded by a molding die, the pre-molded mixture is molded by heating under a condition in which a molding temperature is 130 to 160 degrees C, molding pressure is 20 to 50 MPa, and molding time is 2 to 10 minutes, the molded product is heated at 150 to 250 degrees C for 2 to 10 hours, and therefore, the friction material is produced. In this production method, coating, scorch treatment, and polishing processing may be further carried out as necessary.

### Friction Member

The friction member of this embodiment is formed by using the above friction material of the present invention as friction material on a friction surface. For example, the above friction member can have the following structures.
(1) A structure formed by only the friction material.
(2) A structure formed by a back plate and a friction material which is made of the friction material composition of the present invention and which is a friction surface on the back plate.
(3) A structure formed by further adding a primer layer for surface-modifying the back plate to improve an adhesive effect and an adhesive layer for increasing adhesive force of the back plate and the friction material, between the back plate and the friction material in the above structure (2).

The above back plate is often used as a friction member in order to improve mechanical strength of the friction member, and it is made of metals such as iron, stainless steel, etc., or fiber reinforced plastics such as inorganic fiber reinforced plastic, carbon fiber reinforced plastic, etc. The primer layer and the adhesive layer may be a layer that is often used in the friction material such as a brake shoe.

The friction material composition of this embodiment is particularly useful for an overlay material of the friction member, such as a disc brake pad or a brake lining for automobiles, etc., since fade resistance, wear resistance, etc., are superior. However, it can also be used for an underlay material of the friction member. Here, the "overlay material" is a friction material which is a friction surface of the friction member, and the "underlay material" is a layer intervened between the friction material which is a friction surface of the friction member and the back plate, in order to improve shear strength and crack resistance near an adhered portion between the friction material and the back plate.

### EXAMPLES

In the following, the friction material composition, the friction material and the friction member of the present invention will be explained in detail with reference to Examples and Comparative Examples. However, the present invention is not limited to the above embodiments.

### Examples 1 to 39 and Comparative Examples 1 to 2

### Production of Disc Brake Pad

The friction material compositions of Examples 1 to 39 and Comparative Examples 1 to 2 were obtained by mixing materials at mixing ratios shown in Tables 1 to 4. This friction material composition was mixed by a Lödige mixer (trade name: Lödige M20, produced by Matsubo Corporation), and the mixture was pre-molded by a molding press (produced by Oji Machine Co., Ltd.). Here, the mixing ratios in the tables are mass %. The pre-molded product was hot-press molded with a back plate (produced by Hitachi Automotive Systems Co., Ltd.) made of iron, under a condition in which a molding temperature is 140 to 160 degrees C, molding pressure is 30 MPa, and cycle time is 5 minutes, using a molding press (produced by Sanki Seiko Co., Ltd.). The hot-press molded product was heated at 200 degrees C for 4.5 hours, was polished using a rotary polishing machine, and was scorch treated at 500 degrees C, and therefore, disc brake pads of Examples 1 to 17 and Comparative Examples 1 to 2 were produced. Here, with respect to the disc brake pads produced in Examples and Comparative Examples, a thickness of the back plate was 6 mm, a thickness of the friction material was 11 mm, and a projected area of the friction material was 52 cm².

Here, catalytic active materials used in Examples and Comparative Examples are described below.
- γ Alumina 1: trade name: GP-20, produced by Mizusawa Industrial Chemicals, Ltd. (average particle size: 27 µm, BET specific surface area: 180 m²/g)
- γ Alumina 2: γ alumina produced by Kanto Denka Kogyo Co., Ltd. (average particle size: 50 µm, BET specific surface area: 115 m²/g)
- Dolomite : dolomite produced by Yoshizawa Lime Industry Co., Ltd. (average particle size: 7 µm)
- Calcium Carbonate: trade name: Sun Light 300, produced by Takehara Kagaku Kogyo Co., Ltd. (average particle size: 5 µm)
- Magnesium Carbonate: trade name: Heavy Magnesium Carbonate, produced by Konoshima Chemical Co., Ltd. (average particle size: 10 µm)
- Manganese Dioxide: trade name: Activated Manganese Dioxide, produced by Japan Metals & Chemicals Co., Ltd. (average particle size: 1 µm, BET specific surface area: 260 m²/g)
- Zinc Oxide 1: trade name: Ginrei A, produced by Toho Zinc Co., Ltd. (average particle size: 0.3 µm)
- Zinc Oxide 2: zinc oxide produced by Kanto Denka Kogyo Co., Ltd. (average particle size: 15 nm, BET specific surface area: 35 m²/g)
- Magnetite: trade name: BP303C, produced by Toda Kogyo Corp. (average particle size: 0.3 µm, BET specific surface area: 5 m²/g)
- Cerium Oxide: trade name: TI-CERON HY, produced by Taisei Co., Ltd. (average particle size: 1.2 µm)
- Zirconia: zirconia produced by Kanto Denka Kogyo Co., Ltd. (average particle size: 10 nm, BET specific surface area: 150 m²/g)

**Table 1**

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Inorganic Filler having Decomposition Catalytic Activity | γ Alumina 1 | 5 | 0 | 0 | 0 | 5 | 5 | 5 | 5 | 5 | 5 | 5 | 5 |
| | γ Alumina 2 | 0 | 5 | 15 | 35 | 0 | 0 | 0 | 0 | 0 | 0 | 0 | 0 |
| | Dolomite | 0 | 0 | 0 | 0 | 5 | 0 | 0 | 0 | 0 | 0 | 0 | 0 |
| | Calcium Carbonate | 0 | 0 | 0 | 0 | 0 | 5 | 0 | 0 | 0 | 0 | 0 | 0 |
| | Magnesium Carbonate | 0 | 0 | 0 | 0 | 0 | 0 | 5 | 0 | 0 | 0 | 0 | 0 |
| | Manganese Dioxide | 0 | 0 | 0 | 0 | 0 | 0 | 0 | 5 | 0 | 0 | 0 | 0 |
| | Zinc Oxide 1 | 0 | 0 | 0 | 0 | 0 | 0 | 0 | 0 | 5 | 0 | 0 | 0 |
| | Zinc Oxide 2 | 0 | 0 | 0 | 0 | 0 | 0 | 0 | 0 | 0 | 5 | 0 | 0 |
| | Magnetite | 0 | 0 | 0 | 0 | 0 | 0 | 0 | 0 | 0 | 0 | 5 | 0 |
| | Cerium Oxide | 0 | 0 | 0 | 0 | 0 | 0 | 0 | 0 | 0 | 0 | 0 | 5 |
| | Zirconia | 0 | 0 | 0 | 0 | 0 | 0 | 0 | 0 | 0 | 0 | 0 | 0 |
| Inorganic Filler | Barium Sulfate | 25 | 25 | 15 | 0 | 20 | 20 | 20 | 20 | 20 | 20 | 20 | 20 |
| | Zircon Sand | 5 | 5 | 5 | 5 | 5 | 5 | 5 | 5 | 5 | 5 | 5 | 5 |
| | Potassium Titanate | 15 | 15 | 15 | 10 | 15 | 15 | 15 | 15 | 15 | 15 | 15 | 15 |
| | Mica | 8 | 8 | 8 | 8 | 8 | 8 | 8 | 8 | 8 | 8 | 8 | 8 |
| | Graphite | 5 | 5 | 5 | 5 | 5 | 5 | 5 | 5 | 5 | 5 | 5 | 5 |
| | Tin Sulfide | 5 | 5 | 5 | 5 | 5 | 5 | 5 | 5 | 5 | 5 | 5 | 5 |
| | Calcium Hydroxide | 5 | 5 | 5 | 5 | 5 | 5 | 5 | 5 | 5 | 5 | 5 | 5 |
| Organic Filler | Cashew Dust | 5 | 5 | 5 | 5 | 5 | 5 | 5 | 5 | 5 | 5 | 5 | 5 |
| | Tire Rubber Powder | 5 | 5 | 5 | 5 | 5 | 5 | 5 | 5 | 5 | 5 | 5 | 5 |
| Binder | Phenol Resin | 8 | 8 | 8 | 8 | 8 | 8 | 8 | 8 | 8 | 8 | 8 | 8 |
| Fiber | Aramid Fiber | 4 | 4 | 4 | 4 | 4 | 4 | 4 | 4 | 4 | 4 | 4 | 4 |
| | Mineral Fiber | 5 | 5 | 5 | 5 | 5 | 5 | 5 | 5 | 5 | 5 | 5 | 5 |
| | Copper Fiber | 0 | 0 | 0 | 0 | 0 | 0 | 0 | 0 | 0 | 0 | 0 | 0 |
| Fade Resistance / First Fade µ Minimum | | 0.24 | 0.31 | 0.33 | 0.25 | 0.27 | 0.25 | 0.25 | 0.30 | 0.26 | 0.30 | 0.27 | 0.27 |
| Wear resistance at High Temperature / Abrasion Amount at 500 degrees C (mm) | | 1.9 | 1.4 | 1.5 | 2.2 | 1.3 | 1.5 | 1.7 | 1.8 | 1.4 | 1.5 | 1.4 | 1.5 |

**Table 2**

| | | Examples | | | | | | | | | | | |
|---|---|---|---|---|---|---|---|---|---|---|---|---|---|
| | | 13 | 14 | 15 | 16 | 17 | 18 | 19 | 20 | 21 | 22 | 23 | 24 |
| Inorganic Filler having Decomposition Catalytic Activity | γ Alumina 1 | 5 | 0 | 0 | 0 | 0 | 0 | 0 | 0 | 0 | 0 | 0 | 0 |
| | γ Alumina 2 | 0 | 5 | 5 | 5 | 5 | 5 | 5 | 5 | 5 | 5 | 0 | 0 |
| | Dolomite | 0 | 5 | 0 | 0 | 5 | 0 | 0 | 0 | 0 | 0 | 5 | 0 |
| | Calcium Carbonate | 0 | 0 | 5 | 0 | 0 | 0 | 0 | 0 | 0 | 0 | 0 | 5 |
| | Magnesium Carbonate | 0 | 0 | 0 | 5 | 0 | 0 | 0 | 0 | 0 | 0 | 0 | 0 |
| | Manganese Dioxide | 0 | 0 | 0 | 0 | 5 | 0 | 0 | 0 | 0 | 0 | 0 | 0 |
| | Zinc Oxide 1 | 0 | 0 | 0 | 0 | 0 | 5 | 0 | 0 | 0 | 0 | 0 | 0 |
| | Zinc Oxide 2 | 0 | 0 | 0 | 0 | 0 | 0 | 5 | 0 | 0 | 0 | 0 | 0 |
| | Magnetite | 0 | 0 | 0 | 0 | 0 | 0 | 0 | 5 | 0 | 5 | 0 | 0 |
| | Cerium Oxide | 0 | 0 | 0 | 0 | 0 | 0 | 0 | 0 | 5 | 0 | 0 | 0 |
| | Zirconia | 5 | 0 | 0 | 0 | 0 | 0 | 0 | 0 | 0 | 5 | 0 | 0 |
| Inorganic Filler | Barium Sulfate | 20 | 20 | 20 | 20 | 20 | 20 | 20 | 20 | 20 | 15 | 25 | 25 |
| | Zircon Sand | 5 | 5 | 5 | 5 | 5 | 5 | 5 | 5 | 5 | 5 | 5 | 5 |
| | Potassium Titanate | 15 | 15 | 15 | 15 | 15 | 15 | 15 | 15 | 15 | 15 | 15 | 15 |
| | Mica | 8 | 8 | 8 | 8 | 8 | 8 | 8 | 8 | 8 | 8 | 8 | 8 |
| | Graphite | 5 | 5 | 5 | 5 | 5 | 5 | 5 | 5 | 5 | 5 | 5 | 5 |
| | Tin Sulfide | 5 | 5 | 5 | 5 | 5 | 5 | 5 | 5 | 5 | 5 | 5 | 5 |
| | Calcium Hydroxide | 5 | 5 | 5 | 5 | 5 | 5 | 5 | 5 | 5 | 5 | 5 | 5 |
| Organic Filler | Cashew Dust | 5 | 5 | 5 | 5 | 5 | 5 | 5 | 5 | 5 | 5 | 5 | 5 |
| | Tire Rubber Powder | 5 | 5 | 5 | 5 | 5 | 5 | 5 | 5 | 5 | 5 | 5 | 5 |
| Binder | Phenol Resin | 8 | 8 | 8 | 8 | 8 | 8 | 8 | 8 | 8 | 8 | 8 | 8 |
| Fiber | Aramid Fiber | 4 | 4 | 4 | 4 | 4 | 4 | 4 | 4 | 4 | 4 | 4 | 4 |
| | Mineral Fiber | 5 | 5 | 5 | 5 | 5 | 5 | 5 | 5 | 5 | 5 | 5 | 5 |
| | Copper Fiber | 0 | 0 | 0 | 0 | 0 | 0 | 0 | 0 | 0 | 0 | 0 | 0 |
| Fade Resistance / First Fade µ Minimum | | 0.30 | 0.27 | 0.28 | 0.31 | 0.27 | 0.31 | 0.28 | 0.28 | 0.31 | 0.33 | 0.22 | 0.21 |
| Wear resistance at High Temperature / Abrasion Amount at 500 degrees C (mm) | | 1.4 | 1.5 | 1.5 | 1.6 | 1.5 | 1.6 | 1.7 | 1.6 | 1.5 | 1.9 | 1.6 | 1.8 |

**Table 3**

| | | Examples | | | | | | | | | | | |
|---|---|---|---|---|---|---|---|---|---|---|---|---|---|
| | | 25 | 26 | 27 | 28 | 29 | 30 | 31 | 32 | 33 | 34 | 35 | 36 |
| Inorganic Filler having Decomposition Catalytic Activity | γ Alumina 1 | 0 | 0 | 0 | 0 | 0 | 0 | 0 | 0 | 0 | 0 | 0 | 0 |
| | γ Alumina 2 | 0 | 0 | 0 | 0 | 0 | 0 | 0 | 0 | 0 | 0 | 0 | 0 |
| | Dolomite | 0 | 0 | 0 | 0 | 0 | 0 | 0 | 0 | 0 | 5 | 0 | 35 |
| | Calcium Carbonate | 0 | 0 | 0 | 0 | 0 | 0 | 0 | 0 | 0 | 0 | 5 | 0 |
| | Magnesium Carbonate | 5 | 0 | 0 | 0 | 0 | 0 | 0 | 0 | 0 | 0 | 0 | 0 |
| | Manganese Dioxide | 0 | 5 | 15 | 0 | 0 | 0 | 0 | 0 | 0 | 0 | 0 | 0 |
| | Zinc Oxide 1 | 0 | 0 | 0 | 5 | 0 | 0 | 0 | 0 | 0 | 0 | 0 | 0 |
| | Zinc Oxide 2 | 0 | 0 | 0 | 0 | 5 | 0 | 0 | 0 | 0 | 0 | 5 | 0 |
| | Magnetite | 0 | 0 | 0 | 0 | 0 | 5 | 0 | 0 | 0 | 5 | 0 | 0 |
| | Cerium Oxide | 0 | 0 | 0 | 0 | 0 | 0 | 5 | 0 | 0 | 0 | 0 | 0 |
| | Zirconia | 0 | 0 | 0 | 0 | 0 | 0 | 0 | 5 | 15 | 0 | 0 | 0 |
| Inorganic Filler | Barium Sulfate | 25 | 25 | 15 | 25 | 25 | 25 | 25 | 25 | 15 | 20 | 20 | 0 |
| | Zircon Sand | 5 | 5 | 5 | 5 | 5 | 5 | 5 | 5 | 5 | 5 | 5 | 5 |
| | Potassium Titanate | 15 | 15 | 15 | 15 | 15 | 15 | 15 | 15 | 15 | 15 | 15 | 10 |
| | Mica | 8 | 8 | 8 | 8 | 8 | 8 | 8 | 8 | 8 | 8 | 8 | 8 |
| | Graphite | 5 | 5 | 5 | 5 | 5 | 5 | 5 | 5 | 5 | 5 | 5 | 5 |
| | Tin Sulfide | 5 | 5 | 5 | 5 | 5 | 5 | 5 | 5 | 5 | 5 | 5 | 5 |
| | Calcium Hydroxide | 5 | 5 | 5 | 5 | 5 | 5 | 5 | 5 | 5 | 5 | 5 | 5 |
| Organic Filler | Cashew Dust | 5 | 5 | 5 | 5 | 5 | 5 | 5 | 5 | 5 | 5 | 5 | 5 |
| | Tire Rubber Powder | 5 | 5 | 5 | 5 | 5 | 5 | 5 | 5 | 5 | 5 | 5 | 5 |
| Binder | Phenol Resin | 8 | 8 | 8 | 8 | 8 | 8 | 8 | 8 | 8 | 8 | 8 | 8 |
| Fiber | Aramid Fiber | 4 | 4 | 4 | 4 | 4 | 4 | 4 | 4 | 4 | 4 | 4 | 4 |
| | Mineral Fiber | 5 | 5 | 5 | 5 | 5 | 5 | 5 | 5 | 5 | 5 | 5 | 5 |
| | Copper Fiber | 0 | 0 | 0 | 0 | 0 | 0 | 0 | 0 | 0 | 0 | 0 | 0 |
| Fade Resistance / First Fade µ Minimum | | 0.22 | 0.32 | 0.32 | 0.28 | 0.32 | 0.24 | 0.29 | 0.29 | 0.30 | 0.33 | 0.33 | 0.22 |
| Wear resistance at High Temperature / Abrasion Amount at 500 degrees C (mm) | | 1.9 | 1.4 | 1.6 | 1.8 | 1.7 | 1.8 | 1.1 | 1.2 | 0.8 | 1.0 | 1.0 | 2.2 |

**Table 4**

| | | Examples | | | Comparative Examples | |
|---|---|---|---|---|---|---|
| | | 37 | 38 | 39 | 1 | 2 |
| Inorganic Filler having Decomposition Catalytic Activity | γ Alumina 1 | 0 | 0 | 0 | 0 | 0 |
| | γ Alumina 2 | 0 | 0 | 0 | 0 | 0 |
| | Dolomite | 0 | 0 | 0 | 0 | 0 |
| | Calcium Carbonate | 0 | 0 | 0 | 0 | 0 |
| | Magnesium Carbonate | 0 | 0 | 0 | 0 | 0 |
| | Manganese Dioxide | 35 | 0 | 0 | 0 | 0 |
| | Zinc Oxide 1 | 0 | 0 | 0 | 0 | 0 |
| | Zinc Oxide 2 | 0 | 35 | 0 | 0 | 0 |
| | Magnetite | 0 | 0 | 0 | 0 | 0 |
| | Cerium Oxide | 0 | 0 | 0 | 0 | 0 |
| | Zirconia | 0 | 0 | 35 | 0 | 0 |
| Inorganic Filler | Barium Sulfate | 0 | 0 | 0 | 30 | 25 |
| | Zircon Sand | 5 | 5 | 5 | 5 | 5 |
| | Potassium Titanate | 10 | 10 | 10 | 15 | 15 |
| | Mica | 8 | 8 | 8 | 8 | 8 |
| | Graphite | 5 | 5 | 5 | 5 | 5 |
| | Tin Sulfide | 5 | 5 | 5 | 5 | 5 |
| | Calcium Hydroxide | 5 | 5 | 5 | 5 | 5 |
| Organic Filler | Cashew Dust | 5 | 5 | 5 | 5 | 5 |
| | Tire Rubber Powder | 5 | 5 | 5 | 5 | 5 |
| Binder | Phenol Resin | 8 | 8 | 8 | 8 | 8 |
| Fiber | Aramid Fiber | 4 | 4 | 4 | 4 | 4 |
| | Mineral Fiber | 5 | 5 | 5 | 5 | 5 |
| | Copper Fiber | 0 | 0 | 0 | 0 | 5 |
| Fade Resistance / First Fade µ Minimum | | 0.27 | 0.26 | 0.30 | 0.15 | 0.23 |
| Wear resistance at High Temperature / Abrasion Amount at 500 degrees C (mm) | | 2.5 | 3.2 | 2.5 | 4.5 | 1.8 |

### Evaluation of Fade Resistance

With respect to the fade resistance of Examples and Comparative Examples, friction coefficient generated in braking of a first fade process was measured 10 times, according to Japanese Automobile Standard Organization (JASO) C406 of Society of Automotive Engineers of Japan, Inc., and the minimum value of the friction coefficients was evaluated.

### Evaluation of Wear resistance at High Temperature

With respect to the wear resistance at a high temperature of Examples and Comparative Examples, braking was carried out 1000 times under a condition in which brake temperature is 500 degrees C, vehicle speed was 50 km/h, and deceleration was 0.3 G, according to Japanese Automobile Standard Organization (JASO) C427 of Society of Automotive Engineers of Japan, Inc., and a total abrasion amount of the friction material was evaluated as wear resistance at a high temperature. Here, the above evaluations of the friction coefficient and the wear resistance were carried out at an inertia of 7 kgf▪m▪sec² using a dynamometer. In addition, the above evaluations were carried out using a ventilated disc rotor (produced by Kiriu Corporation, material: FC190) and a general pin slide collet type caliper.

[0053] In Examples 1 to 39, the fade resistance and the wear resistance at a high temperature were equal to or more than those in Comparative Example 2 which contains copper. Furthermore, in Examples 1 to 39, it was obvious that the fade resistance and the wear resistance at a high temperature were more than those in Comparative Example 1, which does not contain inorganic filler having a catalytic activity and copper.

The friction material composition of the present invention is suitably used for a friction material and a friction member such as a brake pad for automobiles, since the fade resistance and the wear resistance at a high temperature are more than those in conventional products, even if copper having a high environmental burden is not contained in the friction material composition.

## Claims

1. A friction material composition comprising a binder, organic filler, inorganic filler and a fiber reinforcement,
wherein the friction material composition does not contain copper as an element or it contains copper in an amount of 0.5 mass % or less, and
the inorganic filler is one or more selected from a group of γ alumina having an average particle size of 10 nm to 50 µm, dolomite having an average particle size of 1 to 20 µm, calcium carbonate having an average particle size of 1 to 20 µm, magnesium carbonate having an average particle size of 1 to 20 µm, manganese dioxide having an average particle size of 1 to 20 µm, zinc oxide having an average particle size of 10 nm to 1 µm, magnetite having an average particle size of 1.0 µm or less, cerium oxide having an average particle size of 0.5 to 5 µm, and zirconia having an average particle size of 5 to 50 nm.

2. The friction material composition according to claim 1, wherein the inorganic filler is contained in an amount of 1 to 35 mass% to a total amount of the friction material composition.

3. The friction material composition according to claim 1 or 2, wherein the one of the inorganic filler is γ alumina having an average particle size of 10 to 50 µm and BET specific surface area of the γ alumina is 50 to 300 m²/g.

4. The friction material composition according to any one of claims 1 to 3, wherein one of the inorganic filler is manganese dioxide having an average particle size of 1 to 20 µm and BET specific surface area of the manganese dioxide is 100 to 300 m²/g.

5. The friction material composition according to any one of claims 1 to 4, wherein the zinc oxide has an average particle size of 10 to 50 nm.

6. A friction material molded by the friction material composition according to any one of claims 1 to 5.

7. A friction member formed by a friction material molded by the friction material composition according to any one of claims 1 to 5 and a back plate.
